# EUROPEAN PATENT APPLICATION

(11) **EP 4 464 171 A1**
(43) Date of publication of application: **20.11.2024**
(21) Application number: 24176587.4
(22) Date of filing: 17.05.2024
(51) Int. Cl.: A23L 7/109, A23L 11/00, A23P 30/20

(54) **LENTIL PASTA AND METHOD FOR ITS PREPARATION**

(30) Priority: 18.05.2023 IT 202300010074
(71) Applicant: Andriani S.p.A., 70024 Gravina In Puglia (BA) (IT)
(72) Inventor: ANDRIANI, MICHELE, 70024 GRAVINA IN PUGLIA (BA) (IT); LABARBUTA, ROSSELLA, 70024 GRAVINA IN PUGLIA (BA) (IT); INGHILTERRA, GIOVANNA, 70024 GRAVINA IN PUGLIA (BA) (IT); DE ANGELIS, MARIA, 70121 BARI (IT); CALASSO, MARIA, 70121 BARI (IT); PORTINCASA, PIERO, 70121 BARI (IT)
(74) Representative: Bianchetti & Minoja with Trevisan & Cuonzo IPS SRL

(57) **Abstract**

The present invention relates to a red lentil flour, a food composition comprising it, a method of pasta making, and a pasta obtainable from said method, and its use in the food field.

## Description

### Technical Field of the Invention

The present invention relates to a lentil flour, a pasta prepared from said flour, and a method of preparation of said pasta.

### Background art

Nowadays, there is a growing attention towards the food product nutritional characteristics. In particular, food products like bread and pasta play a key role within the daily diet. The digestibility of a specific food product is a characteristic going hand in hand with the concepts of health and well-being, especially when the food product is eaten on a daily basis, such as pasta.

In the last years, with the increase of intolerances and/or food allergies, such as celiac disease, gastro-intestinal disorders of various nature and origin, such as IBS (Irritable Bowel Syndrome) and pathologies linked to sugar metabolism, such as diabetes, different kinds of pasta derived from alternative sources emerged, such as cereals, including rice and corn, or legumes.

In this regard, the pasta prepared with raw materials different from wheat has different nutritional and sensorial characteristics, strictly depending on the used raw material.

A known alternative to the raw material wheat is represented by the leguminous family, which until recently was a niche product available only on shelves of shops specialized in natural food, whose most widespread variants are chickpea flour, red lentil flour, pea flour and, more rarely, bean flour. Even versions prepared with a mix of legume and cereal flours, such as corn and rice, exist.

From one side, the percentage of carbohydrates in legume pasta is notably lower (about 50% *versus* 75%), further this pasta is rich in fibers which are absent in the not-whole wheat pasta. Those with problems in controlling glycemia can take advantage from these characteristics since this pasta, having more fibers and less sugars, has a glycemic index lower than the classic pasta. Secondly, the absence of gluten (if certified from the producer) makes it a valid alternative for celiac people.

The pasta obtained starting from legumes, born initially as an alternative for celiac people, in few years has expanded its consumer public: in fact, only legume-based spaghetti and rigatoni represent a market with a value of 38 million euros and register an annual grow of 5% in the retailing and distribution industry and 17% in discounts.

This phenomenon depends, not only on the re-discovery of the vegetal proteins, whose request have had a 20% increase between 2020 and 2021, but also on the positive nutritional, sensorial, and technological characteristics of the products containing said vegetal proteins, specifically the legumes.

In fact, the legumes are a very important protein food source, being characterized by an essential amino acid content nutritionally better than cereals. However, they contain different anti-nutritional factors (protease inhibitors, condensed tannins, raffinose) with negative effects on the consumer health. The decortication, germination, cooking, and fermentation are widely known techniques for the diminution of the harmful effect of such compounds.

Among legumes, the red lentil is a legume rich in fibers and proteins, characterized by the high content of iron, phosphorous, zinc, and manganese.

It is a healthy product even sustainable for the environment, since sowing legumes in rotation with other crops helps to enrich depleted soils.

The current pastas derived from legume flours are produced starting from steamed, dried, and grinded legumes; the thus obtained flour is kneaded with water, then drawn to shape it.

The known productive processes use several production steps and use wide energetic resources, in the form of electricity and mostly heat.

The use of heat and mechanical friction during the pasta production process allows to obtain a product which is not always able to keep the right consistency after cooking.

Further, the current production processes use emulsifying agents, preservatives, and/or other technological adjuvants, that remain in the final product at the end of the process.

Furthermore, the current production processes do not guarantee satisfying properties of the end product, neither from the point of view of the cooking resistance, which is not always intact and "al dente," nor from the point of view of the taste and the outer appearance, with possible changes in shape and color after cooking.

In light of the above, there is still the need to find a new flour deriving from legumes, and specifically from red lentil, which, while maintaining the properties and the nutritional values of the red lentil, allows the intake, by the pasta obtained therefrom, of nutrients in a higher amount compared to the pasta derived from cereals and cereal and legume mixtures.

Further, there is still the need to implement the production process of said pasta, in order to optimize the properties of the end product, such as its chewiness, integrity after cooking, while guaranteeing the easiness of processing during all steps of the process and ensuring a fast process with less use of energetic resources and therefore less environmental impact.

### Summary of the Invention

The present invention relates to a flour consisting of 100% w/w red lentils having a particle size of less than 355 µm with the following particle size distribution, measured by means of a MLI300 model Buhler sieve, according to the methods known in the state of the art:

**Table A**

| **Particle diameter** | **<355 µm** | **<290 µm** | **<250 µm** | **<200 µm** | **<125 µm** | **<90 µm** |
|---|---|---|---|---|---|---|
| (%) | from 99.9 to 99.5 | from 98.5 to 99.5 | from 79.5 to 83.5 | from 54 to 54.5 | from 29.5 to 30.5 | from 24.5 to 25 |

The invention further relates to a process for producing a red lentil pasta, comprising the steps of:
a) providing at least one red lentil flour according to the invention;
b) mixing said flour of step a) with water, to obtain a dough;
c) extruding said dough of step b), to obtain a moist pasta;
d) drying the moist pasta of step c), to obtain a dried pasta; and
e) cooling said dried pasta of step d), to obtain a cold dried pasta;
wherein:
in step b) the water amount is comprised between 20 and 30% by weight with respect to the total weight of the dough; and
step c) is carried out by cold extrusion, preferably in the absence of introduction of steam.

A further object of the invention is, therefore, a pasta obtainable by the above described process, consisting of 100% w/w red lentil flour, without addition of any additive, and a food composition comprising the flour of the invention.

Said pasta and said food composition are used in the food field and preferably in the field of the gluten-free food products. Therefore, a further aspect of the present invention is a use both of the pasta obtained according to the invention, and of the food composition, in the food field and preferably in the field of the gluten-free diet.

### Brief description of the Figures

Figure 1: image representing the press used for the production of the pasta of the invention according to Example 1;
Figure 2: image representing the co-rotating twin-screw used for the production of the pasta of the invention according to Example 1;
Figure 3A/B: graphs of the Elisa results of pasta samples assessed in dendritic cells for the immunostimulant activity (IL-6 and TNFα);
Figure 4A/B: graphs of the Elisa results of pasta samples assessed in dendritic cells for the immunostimulant activity (IL-1a and IL-1b);
Figure 5: scheme of the subdivision of the subjects administered with two different kinds of pasta;
Figure 6: graph representing the average values of fullness (appetite/satiety) following the intake of the two kinds of pasta; A = lentil pasta of the invention and D = corn-rice pasta of the prior art;
Figure 7: graph representing the average values of sickness/vomit following the intake of the two kinds of pasta; A = lentil pasta of the invention and D = corn-rice pasta of the prior art;
Figure 8: graph representing the average values of meteorism following the intake of the two kinds of pasta; A = lentil pasta of the invention and D = corn-rice pasta of the prior art;
Figures 9-12A/B: graphs representing the glycemic analysis of 40 healthy volunteers after thirty days intake of 3 different kinds of gluten-free pastas, respectively A: red lentil pasta of the invention, C: buckwheat pasta of the prior art, and D: corn-rice pasta of the prior art;
Figure 13: graph representing the total cholesterol data of 40 healthy volunteers after thirty days (T₃₀) intake of 3 different kinds of gluten-free pastas;
Figure 14: graph representing the LDL form data of 40 healthy volunteers after thirty days (T₃₀) intake of 3 different kinds of gluten-free pastas;
Figure 15: graph representing the HDL cholesterol data of 40 healthy volunteers after thirty days (T₃₀) intake of 3 different kinds of gluten-free pastas;
Figure 16: graph representing the triglyceride data of 40 healthy volunteers after thirty days (T₃₀) intake of 3 different kinds of gluten-free pastas;
Figure 17: graph representing the cell density of the lactic acid bacteria and bifidobacteria after thirty days (T₃₀) intake of two different kinds of gluten-free pastas.

### Detailed Description of the Invention

It was surprisingly found that due to the process of the invention, it is possible to obtain a pasta made only from red lentils, without using emulsifying agents, preservatives, and/or further additives, naturally gluten-free, and endowed with high organoleptic and nutritional qualities.

In the present invention, the term:
- "humidity" means the water percentage contained on 100 g of dry matter measured according to UNI CEI EN ISO/IEC 17025:2018 ACCREDIA 0490L standard;
- "extrusion" means also drawing, *i.e.* the process leading to the formation of pasta starting from a homogeneous dough;
- "shaker predryer" means a machine able to pre-dry and uniformly separate the pasta through a vibrant plan and a hot humid air-jet.
- "dryer part I" means a machine allowing the product humidity elimination, fixing its shape by water transmigration from the inner layers to the outer one;
- "dryer part II" means a tunnel consisting of sliding panels the pasta goes through for its entire length;
- "cooler" means a machine controlling the pasta final temperature, bringing it to room temperature (20-30 °C).

The present invention relates to a flour consisting of 100% w/w red lentils having a particle size of less than 355 µm, measured by means of a MLI300 model Buhler sieve, according to the methods known in the state of the art, for example using a series of sieves calibrated in the dimensional sequence of mesh opening in a vibrant screen so that the powder distributes in the various sieves according to the particle diameter until the weight on the various sieves does not change and the weight distribution is measured by measuring the amount passed from each sieve to the next, having the following particle size distribution:

**Table A**

| **Particle diameter** | **<355 µm** | **<290 µm** | **<250 µm** | **<200 µm** | **<125 µm** | **<90 µm** |
|---|---|---|---|---|---|---|
| (%) | from 99.9 to 99.5 | from 98.5 to 99.5 | from 79.5 to 83.5 | from 54 to 54.5 | from 29.5 to 30.5 | from 24.5 to 25 |

Preferably, said particle size is comprised from 355 µm to 90 µm, measured by means of a MLI300 model Buhler sieve, according to the methods known in the state of the art. More preferably the average particle size ranges from 250 µm to 90 µm, even more preferably the average particle size of a fraction up to 60% is less than 180 µm.

Advantageously, said particle size distribution is obtained by grinding, preferably by the Retsch Mod. ZM 200 Code: 20.823.0001 laboratory mill, for example at a peripheric rotor speed from 31 to 93 m/s.

In a preferred and advantageous embodiment of the invention, the flour of the invention is characterized by:
- a humidity comprised between 10 and 12%, more preferably of less than 11%, and/or
- a protein solubility index (NSI) (%) comprised between 74.5 and 82.5, and/or
- a gelatinization grade (%) comprised between 7.3 and 7.5, and/or
- an amylose amount (%w/w) comprised between 26.5 and 29.5, and/or
- damaged starch (%) comprised between 2 and 2.5.

It was surprisingly found that the specific particle size profile found for the lentil flour of the invention allows at the same time to favor the mixing of the ingredients during the production process, separate the components (starch, proteins, and fibers) so as to improve the value and/or the functionality thereof, and to exert mechanical-chemical transformations (first of all, to cause damages to the starch) in a simpler and faster way. Further, said particle size distribution allows to improve the final structural characteristics of a pasta endowed with it, such as its chewiness and surface integrity after cooking.

The surprising characteristics of the lentil flour the invention are verifiable, as will be evident from the experimental part, through the quantification of its nutrients, for example the presence of specific compounds like vitamins and mineral salts, such as phosphorous, calcium, magnesium, iron, zinc, and manganese, fibers, proteins in a high concentration, carbohydrates, and fats, even if at low amount.

The flour of the invention is subsequently mixed with water to obtain a dough, and it is subsequently further treated, by a specific production process, which allows to improve the qualitative characteristics of the pasta obtained as a final product.

In light of this, the invention further relates to a process for producing a red lentil pasta, comprising the steps of:
a) providing at least one flour according to the invention;
b) mixing said flour of step a) with water, to obtain a dough;
c) extruding said dough of step b), to obtain a moist pasta;
d) drying said moist pasta of step c), to obtain a dried pasta; and
e) cooling said dried pasta of step d), to obtain a cold dried pasta;

wherein in step b) the water amount is comprised between 20 and 30% by weight with respect to the total weight of the dough; and
step c) is carried out by cold extrusion, preferably in the absence of introduction of steam, more preferably keeping a temperature of the dough comprised between 43 and 55 °C, even more preferably a temperature between 45 and 50 °C.

It was surprisingly found that the specific process steps, their sequence and, in particular, step c) of cold extrusion, allow to produce a pasta made only from red lentils, without using emulsifying agents, preservatives, and/or further additives, naturally gluten-free, and endowed with high organoleptic and nutritional qualities.

Preferably, in step a) the red lentil flour of the invention, as hereinabove defined, is gravimetrically dosed according to techniques known in the state of the art.

This step a) allows to avoid the starting material waste and to obtain the highest qualitative yield, even in terms of homogeneity and processability, starting from the flour of step a) to reach the dough of step b).

The process of the invention comprises a step b) of mixing the red lentil flour of step a) with water so as to obtain a dough.

Preferably, in step b) the red lentil flour of step a) is mixed with water by means of a co-rotating twin-screw.

Even more preferably, in step b) the water concentration with respect to the total weight of the dough is comprised between 24 and 27%.

This step b) allows to form the dough, giving rise, by mechanical action, to the protein reticulum and starch gelatinization.

More preferably, the process comprises a step b1) after step b) and before step c) of thermo-regulating, which brings the dough of step b) to a temperature comprised between 20 and 30 °C.

The process of the invention comprises a step c) of cold extrusion of the dough of step b), so as to obtain a moist pasta.

In fact, it was surprisingly found that, without the steam aid, therefore in cold conditions, the sensorial properties of the red lentil pasta of the invention are notably improved.

Specifically, as will be evident from the experimental part, the results obtained through panel test showed that the pasta obtained by step c) of cold extrusion, shows an improved appearance both raw and cooked, compared to the pasta of the prior art, obtained by the common hot extrusion, by exposition to hot steam. Even the taste is notably ameliorated and the texture more appetible.

Preferably, step c) is carried out by means of a compression screw, compressing the dough by applying a pressure comprised between 60 and 70 bars and keeping a temperature of the dough comprised between 43 and 55 °C, preferably a temperature between 45 and 50 °C, and conveying the dough on an extruder, so as to obtain a moist pasta.

Preferably, depending on the used extruder, for the line of long pasta and short pasta, respectively, it is possible to obtain a pasta having different shapes, including spaghetti, penne, and fusilli.

The process of the invention comprises a step d) of drying the moist pasta of step c) so as to obtain a dried pasta.

Advantageously, step d) allows to dry the dough and bring it to humidity levels of less than 12.5%.

Preferably, said step d) is carried out in a dryer, more preferably for a time comprised between 3 hours and 6 hours, even more preferably between 3 hours and 20 mins and 5 hours and 30 mins.

In fact, the time in step d) depends on the pasta shape, *i.e.* short or long pasta.

Said step d) is carried out preferably by hot air flows having a temperature comprised between 58 °C and 85 °C and at a humidity between 60 and 70%.

In a preferred embodiment of the invention, the process further comprises a step c1), after step c) and before step d), of pre-drying, wherein the moist pasta of step c) is conveyed within a shaker predryer, and subjected to an air-jet at a temperature comprised between 58 °C and 68 °C and at a relative humidity between 18% and 24%.

In this preferred embodiment of the invention, after step c1) and before step d), a step c2) is present, wherein the moist pasta of step c) is conveyed from the shaker predryer of step c1) to a paper wrapping machine.

Said step c2) is carried out preferably at a temperature comprised between 72 °C and 80 °C and at a relative humidity between 60 and 78%, for a time comprised between 45 and 120 minutes.

The process comprises a step e) to lower the temperature of said dried pasta so as to obtain a cold dried pasta.

Preferably, said step e) is carried out within a cooler and/or a stabilizer.

More preferably, said step e) is carried out by air currents having a temperature comprised between 25 °C and 30 °C, and it is carried out for a time comprised between 3 and 5 minutes, to bring pasta of step d) to room temperature (20-30 °C).

Said step e) allows to avoid that in the next steps, until the use of the pasta of the invention by the final user, the product deteriorates.

Therefore, the process of the invention allows, due to the specific sequence of the steps and the use of a cold extrusion step, in the absence of introduction of steam, to obtain a pasta consisting of 100% red lentil flour of the invention, keeping intact the organoleptic properties of the flour deriving from and results in a better product even after cooking, from the structural, organoleptic, and nutritional point of view.

As will be evident from the experimental part, said pasta, obtained by the process of the invention, using starting material different from wheat (semolina-based traditional pasta) and rice and corn (gluten-free traditional pasta), shows surprising and advantageous values of glycemic index, digestibility, antioxidant activity, anti-inflammatory activity, and a positive influence on the human intestinal microbiota.

Further, the pasta of the invention, obtained by the method of the invention, is totally free of preservatives, emulsifying agents, and other chemical additives usable in the food field, thus allowing the final user the intake of a 100% natural product. These advantages make it suitable for people such as celiacs, diabetics, and additive intolerants, and vegetarians and/or vegans or sportsmen/women, due to the total absence of any additive and the absence of gluten and the reduced carbohydrate amount in favor of the high protein content, in the flour of the invention consisting of 100% red lentils.

In light of this, a further object of the present invention is, therefore, a pasta obtainable by the above-described process, consisting of 100% w/w red lentil flour, without the addition of any additive and a food composition comprising the flour of the invention.

Said pasta and said food composition are used in the food field and preferably as gluten-free food products. Therefore, a further aspect of the present invention is a use both of the pasta of the invention, and of the food composition, in the food field and preferably in the gluten-free food field.

The following Examples further illustrate the invention.

### EXAMPLES

### Materials and Methods

In Example 1: - the used red lentil grains are RED CLIFF and DAZZLE, however these kinds are to be meant as exemplificative and not limitative; - the press is from the Buhler brand, Polymatik type, and comprises a gravimetric dosage unit, a co-rotating twin-screw extruder (operating as a mixer/kneader) and a single-screw extruder; - the dryer is from the Buhler CH-9240 Uzwil brand, Mod. SG-Dryer TTHD-11/10 of 2018; and - the grinding mill is a multigrain mill consisting of a rolling mill from the Buhler brand, Mod. MDDP; and a Plansichter, Buhler brand, Mod. MPAV.

In Example 2: - the pepsin was provided by Sigma Chemical CO; - porcine α-amylase was provided by Sigma Chemical CO, Mo USA; - the dialysis membrane was provided by Sigma Chemical CO; the amyloglucosidase was provided by Boehringer; - the D-Fructose/D-Glucose analysis kit was provided by Megazyme International Ireland Limited, Bray, Ireland; - the Megazyme Resistant K-RSTAR starch kit was provided by Megazyme International Ireland Limited, Bray, Ireland; - the K-PHYT 05/07 kit was provided by Megazyme International Ireland Limited, Bray, Ireland.

### EXAMPLE 1 - Process of pasta making for pasta preparation

A red lentil grain (*Lens culinaris M.,* cv. Itaca) was provided with the following characteristics:
- proteins equal to 24.08 ± 0.81 g/100 g,
- fibers equal to 19.26 ± 2.54 g/1 g,
- complex carbohydrates equal to 40.52 g/100 g,
- fats equal to 1.36 ± 0.21 g/100 g,
- phosphorous equal to 376 ± 30.1 mg/100 g,
- calcium equal to 24.8 ± 2.5 mg/100 g,
- iron equal to 6.12 ± 0.92 mg/100 g,
- zinc equal to 3.81 ± 0.76 mg/100 g, and
- manganese equal to 1.53 ± 0.31 mg/100 g.

After a washing, disinfestation, and decortication step, said grain was subjected to grinding by means of a multi grain mill to obtain a 100% red lentil flour with a definite particle size (Tables 2A and 2B) having the qualitative characteristics illustrated in Table 1.

**Table 1**

| | |
|---|---|
| Water (%) | [10-12] |
| Ashes (% dm) | [2.30-2.55] |
| Fat (% dm) | [0.8-0.9] |
| Proteins (%) | [28.5] |
| Protein solubility index (NSI) (%) | [74.5-82.5] |
| Gelatinization grade (%) | [7.3-7.5] |
| Amylose (%) | [26.5-29.5] |
| Damaged starch (%) | [2-2.5] |

The values of Table 1 are herein defined by a range due to the required variability of the above in the agronomic field.

The particle size was measured by means of Buhler MLI330 sieves of different width (with size indicated in Table 2B) and the results for the lentil flour of the invention are indicated in Tables 2A and B.

**Table 2A**

| **Particle diameter** | **<355 µm** | **<290 µm** | **<250 µm** | **<200 µm** | **<125 µm** | **<90 µm** |
|---|---|---|---|---|---|---|
| **(%)** | [99.9-99.5] | [98.5-99.5] | [79.5-83.5] | [54-54.5] | [29.5-30.5] | [24.5-25] |

**Table 2B**

| **Particle diameter** | **<300 µm** | **<250 µm** | **<180 µm** | **<125 µm** | **<100 µm** | **remnant** |
|---|---|---|---|---|---|---|
| **(%)** | 0 (±1) | 10 (±5) | 35 (±5) | 25 (±5) | 10 (±5) | 20 (±5) |

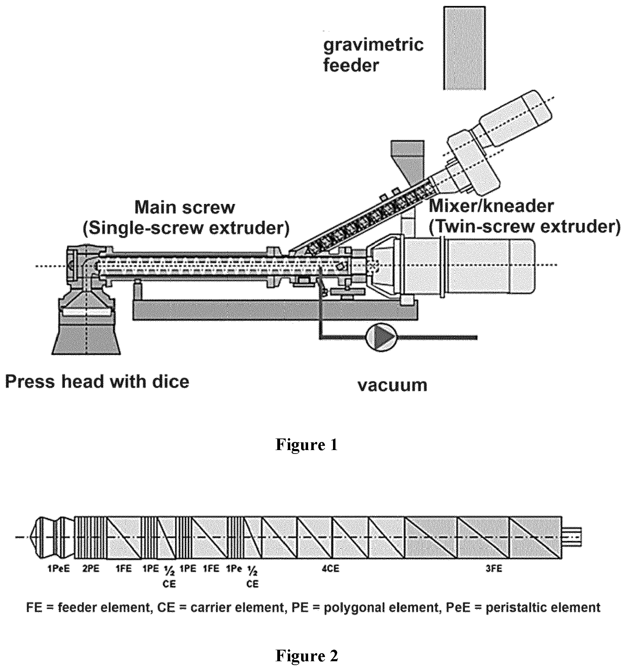

The lentil flour of the invention, having the characteristics illustrated in Tables 1 and 2A-B, was inserted in a press, represented in Figure 1, and mixed with water at a concentration of 24-27% by weight with respect to the weight of the dough, according to the parameters shown in Table 3.

**Table 3**

| **Lentil flour** | | |
|---|---|---|
| Dosage (kg/h) | [1250-1350] | 1300 |
| Water (%) | [24-27] | 25.5 |
| Temperature (°C) | [25-28] | 26.5 |

| **Steam** | | |
|---|---|---|
| Dosage (%) | 0 | 0 |
| Pressure (bar) | 0 | 0 |
| Temperature (°C) | 0 | 0 |

The thus obtained red lentil flour-based mixture of the invention was kneaded by a kneader equipped with a co-rotating twin-screw, represented in Figure 2, for a time of 2.5 mins, according to the parameters shown in Table 4.

**Table 4**

| | | |
|---|---|---|
| Speed (rpm) | [70-80] | 75 |
| Power (KW) | [40-50] | 45 |
| Temperature (°C) | [30-35] | 32.5 |

| **Screw** | | |
|---|---|---|
| Speed (rpm) | [23-25] | 24 |
| Power (KW) | [70-80] | 75 |
| Vacuum (mbar) | [145-185] | 165 |

| **Cylinder** | | |
|---|---|---|
| Temperature (°C) | [28-32] | 30 |

| **Head** | | |
|---|---|---|
| Temperature (°C) | [58-62] | 60 |
| Dough temperature (°C) | [58-62] | 60 |
| Dough pressure (bar) | [65-70] | 67.5 |

The thus obtained dough was subsequently extruded by means of a compression screw, compressing the dough applying a pressure comprised between 60 and 70 bars keeping the temperature of the dough comprised between 45 and 50 °C and conveying the dough on the extruder, thus obtaining a moist pasta, which is drawn and finally inserted in a dryer, according to the parameters reported in Table 5.

**Table 5**

| **Pre-drying** | | |
|---|---|---|
| Temperature (°C) | [78-82] | 80 |
| Relative humidity (%) | [60-65] | 62.5 |

| **Drying** | | |
|---|---|---|
| Temperature (°C) | [78-82] | 80 |
| Relative humidity (%) | [65-70] | 67.5 |

| **Cooling** | | |
|---|---|---|
| Temperature (°C) | [25-28] | 26.5 |
| Relative humidity (%) | [45-55] | 50 |
| Total time (mins) | [240-290] | 265 |

### EXAMPLE 2 - Test of the characteristics of the pasta of the invention, obtained according to Example 1

The pasta of the invention according to Example 1 showed a better texture and surface integrity after cooking. Both the characteristics can depend on the influence of the gelatinization grade of the lentil flour, *i.e.* 7.3-7.5% on the water absorption by the pasta.

In Table 6, the final characteristics of the pasta of the invention are reported, obtained by the cold extrusion process of the invention, which allowed to improve the pasta making process and provide a qualitatively higher final product, wherein + means a negative evaluation, while +++ means a very positive evaluation.

**Table 6**

| | **Chewiness** | **Surface integrity** |
|---|---|---|
| **Hot mixing/extrusion (average T 75 °C for a time of 3 mins and 30 secs of the dough according to Example 1)** | // | + |
| **Cold mixing/extrusion (average T 45 °C for a time of 3 mins and 30 secs of the dough according to Example 1)** | ++ | +++ |
| **Prior art pasta (semolina)** | ++ | +++ |

Therefore, from Table 6 it is evident the importance of the cold mixing/extrusion step compared to the known hot mixing in order to obtain a better product. In fact, without the steam (cold extrusion) higher sensorial properties compared to the use of hot steam (hot extrusion) are obtained.

### EXAMPLE 3 - Test of the hydrolysis index and resistant starch of the prior art pasta compared to the pasta of the invention

The following kinds of pasta were selected:
- prior art pasta in the shape of fusilli having the following composition: mixture of 50% bio corn flour, 50% bio rice flour (bio whole rice flour, bio white rice flour); and
- prior art pasta in the shape of pennette having the following composition: 100% wheat semolina; and
- dry pasta in the shape of fusilli of the invention having the following composition: 100% (bio) red lentils.

Three different batches of each sample of selected pasta were provided:
- 250 g of the sample having the composition: mixture of 50% bio corn flour, 50% bio rice flour;
- 500 g of the sample having the composition: 100% wheat semolina;
- 250 g of the sample having the composition: 100% red lentils.

The three batches were subjected to the evaluation of the carbohydrate hydrolysis index by the procedure described in *"*De Angelis, M., Damiano, N., Rizzello, C. G., Cassone, A., Di Cagno, R., & Gobbetti, M. (2009). Sourdough fermentation as a tool for the manufacture of low-glycemic index white wheat bread enriched in dietary fibre. European Food Research and Technology, 229(4), 593-601*".*

An aliquot of pasta after cooking at the cooking time of the product (different according to the sample), corresponding to 1 g of total starch, was added to 7.1 ml of an α-amylase solution consisting of: - 100 µl of α-amylase at a 56 mg/ml concentration and 7 ml of phosphate buffer, consisting of phosphate at a concentration of 0.05 M at pH 6.9 and 0.4 g/l NaCl, to simulate the saliva amount, and subsequently to 50 mg of pepsin in 6 ml of 0.05 M phosphate buffer, having pH 6.9 and containing 0.4 g/l NaCl.

The pH was brought to 1.5 by 2 M HCl. Each sample was incubated at 37 °C for 30 mins under stirring. Subsequently, the pH was brought to 6.9 by 0.5 M NaOH and incubated with porcine α-amylase.

The enzyme α-amylase was solubilized in 10 ml of buffer and 1 ml of solution was added to the beaker content.

The sample was brought to the final volume of 30 ml with phosphate buffer and transferred into a dialysis membrane, having a cut-off of 12400. The membrane was incubated at 37 °C for 16 hours in 800 ml of phosphate buffer, in a stirring bath.

Subsequently, 3 ml of a 0.4 M sodium-acetate buffer, having pH 4.75, was added to 2 ml of the permeate (0, 3, 16 h) and 80 µl of amylo-glucosidase at 140 U/ml was added to hydrolyze the starch digested in glucose and subsequently stirred in a stirring bath for 45 mins at 60 °C.

The glucose content was measured by a D-Fructose/D-Glucose analysis kit. The digestion grade of the starch at 180 mins was expressed as percentage of starch hydrolyzed on the total (determined at 16 h of incubation).

Three batches of prior art wheat semolina pasta (weight of each batch: 500 g) and three batches of prior art corn and/or rice-based pasta (weight of each batch: 250 g, 250 g, 500 g) were used as a control to assess the hydrolysis index (HI = 100).

Further, the estimated glycemic index values (pGI) were calculated using the following equation: GI = 0.549 × HI + 39.71.

The starch hydrolysis percentage indicates the percentage of starch converted in glucose following to the enzymatic digestion processes. The higher the percentage of starch hydrolysis, the more glucose is released. The glycemic index measures the speed with which the carbohydrates of a food product are digested, absorbed, and poured again in the blood in the form of glucose; in short, the speed with which the glycemia increases after a meal (bell curve of the glycemic peak) corresponds to the glycemic index. The glycemic index strictly correlates to the speed and entity of starch digestion; in fact, reducing sugars are released during starch digestion with an increase of the sugar level in blood. This results in the raising of the glycemic peak thus leading immediately to a high peak and subsequently to a sudden peak down. Therefore, the pasta with a hydrolysis percentage lower than semolina pasta, causes a low raising of the glycemia.

In Table 7 the carbohydrate hydrolysis index (%) and the estimated glycemic index (pGI) results calculated on g of pasta containing 1 g of starch, of all the different analyzed batches of the different shapes of pasta are indicated. The HI was calculated reporting the hydrolysis percentage of each sample with the hydrolysis percentage of a prior art semolina, used as a control, and having a hydrolysis percentage equal to about 45.

**Table 7**

| | **% of Starch hydrolysis** | **Hydrolysis index (HI)** | **Estimated glycemic index** |
|---|---|---|---|
| **Pasta of the invention (lentils)** | 32.08 ± 1.5 | 71.51 ± 3.9 | 78 ± 2.33 |
| **Prior art pasta (corn-rice)** | 34.82 ± 2.43 | 77.38 ± 1.94 | 83.27 ± 3.11 |
| **Prior art pasta (semolina)** | 45 ± 2.48 | 100 ± 3.20 | 94.63 ± 4.09 |

| | | | |
|---|---|---|---|
| *The analyses were carried out in double on each pasta batch, and the results obtained from three analytic replicates were expressed as mean ± standard deviation (SD). The comparisons between the groups were performed by ANOVA followed by Tukey-Kramer post-hoc test. Different letters mean significative differences (P value <0.05). | | | |

As evident from Table 7, with respect to the semolina pasta and also the corn-rice gluten-free pasta, the lentil based-pasta of the invention shows lower carbohydrate hydrolysis (%) and lower estimated glycemic index (pGI).

In addition, the resistant starch was determined using the Megazyme Resistant K-RSTAR starch kit, according to the method AACC 32-40.01.

The resistant starch belongs to the food fibers and represents a benefit for the health having functional properties. The term "resistant starch" refers to the starch fractions escaping from the digestion in the human small intestine, starch entering in the large intestine where it is partially or totally fermented. The resistant starch plays also a role as a substrate for the microbic fermentation for the colon microbiota of the large intestine. The resistant starch can reduce the risk of developing diabetes mellitus of type 2, obesity, coronary disease, intestinal inflammatory diseases, and gastrointestinal disorders. Therefore, the resistant starch is generally considered one of the components making the total of the food fiber. The interest in the resistant starch is bond to its effects on the gastrointestinal tract, which in many ways are similar to those of food fibers. As the soluble fiber, the resistant starch is a substrate for colon microbiota, forming metabolites including short chain fat acids, *i.e.* acetic, propionic, and butyric acids, mainly. The consume of resistant starch was also correlated to the reduction of the postprandial glycemia and insulin responses, which can be beneficial implications in diabetes management. Therefore, there is a wide justification to assume that the resistant starch acts physiologically as a soluble fiber.

The higher the content of resistant starch, the higher the amount of soluble fiber not digestible by the intestine which is known to exert beneficial activities for human health.

The results related to the resistant starch determination are indicated in Table 8 and are expressed as g of resistant starch on 100 g of raw pasta.

**Table 8**

| | **Resistant starch (g/100 g raw pasta)** | **Not-resistant starch (g/100 g raw pasta)** | **Total starch** |
|---|---|---|---|
| **Pasta of the invention (red lentil)** | 4.29 ± 0.05 | 53.77 ± 1.14 | 58.06 ± 0.36 |
| **Prior art pasta (corn-rice)** | 1.27 ± 0.01 | 97.64 ± 3.78 | 99.43 ± 2.46 |
| **Prior art pasta (semolina)** | 1.07 ± 0.03 | 90.92 ± 0.33 | 91.99 ± 0.36 |

| | | | |
|---|---|---|---|
| * The analyses were carried out in double on each pasta batch, and the results obtained from three analytic replicates were expressed as mean ± standard deviation (SD). The comparisons between the groups were performed by ANOVA followed by Tukey-Kramer post-hoc test. Different letters mean significative differences (P value <0.05). | | | |

The red lentil pasta of the invention has resistant starch values higher than the other kinds of prior art pasta.

### EXAMPLE 4 - Assessment of the antioxidant and immunostimulant activity

Three different batches of each sample of selected pasta were provided:
- 500 g - 250 g of the sample having the composition: mixture of 50% bio corn flour, 50% bio rice flour;
- 250 g of the sample having the composition: 100% red lentils.

The three batches were subjected to the assessment of the antioxidant and immunostimulant activity after cooking.

The antioxidant activity determination was carried out by DPPH and ABTS tests indicated in *"*Difonzo, G., Russo, A., Trani, A., Paradiso, V. M., Ranieri, M., Pasqualone, A. & Caponio, F. (2017). Green extracts from Coratina olive cultivar leaves: Antioxidant characterization and biological activity. Journal of Functional Foods, 31, 63-70*".*

The antioxidant activity was estimated by measurement of the radical-scavenging ability towards DPPH. Specific reagents for carrying out the assay (ABTS, 2,2'-azino-bis(3-ethylbenzothiazolin-6-sulphonic acid; DPPH (2,2-diphenyl-1-picrylhydrazyl); Trolox (6-hydroxy-2,5,7,8-tetramethylchromane-2-carboxylic acid), were used for such activity.

Instead, the immunostimulant activity was assessed using specific human cell lines (*e.g.* Caco2, and HT29).

For the assessment of the immunostimulant activity the following protocol was applied:
- weighting a sample aliquot containing 1 gram of starch;
- cooking the sample at the optimal cooking;
- adding 7.1 ml of an α-amylase solution consisting of: - 100 µl of α-amylase having a concentration of 56 mg/ml and 7 ml of phosphate buffer, consisting of phosphate at a concentration of 0.05 M at pH 6.9 and 0.4 g/l NaCl;
- dissolving 50 mg of pepsin in 6 ml of phosphate buffer (consisting of phosphate in concentration of 0.05 M at pH 6.9 and 0.4 g/l NaCl) and adding it to the sample;
- bringing the sample to pH 1.5 (optimal pH for the enzyme) by 2 M HCl;
- incubating at 37 °C for 30' under continuous stirring;
- bringing the sample to pH 6.9 by NaOH;
- adding a solution containing α-amylase (100 µl (56 mg/ml));
- bringing to a volume of 30 ml with phosphate buffer (consisting of phosphate in concentration of 0.05 M at pH 6.9 and 0.4 g/l NaCl);
- transferring the whole into a dialysis membrane (cut off 12,400 previously boiled for rehydration);
- placing each membrane in a beaker containing 800 ml of phosphate buffer (consisting of phosphate in concentration of 0.05 M at pH 6.9 and 0.4 g/l NaCl) added with 80 µl of 5% sodium azide, 80 mg of chloramphenicol, and 4 ml of 2-propanol;
- placing the beaker in a stirring bath for 3 hours and for 16 hours withdrawing at the end both the permeate and the retentate;
- freeze-drying the samples.

Subsequently, the freeze-dried samples were resuspended in water and used to stimulate the immune response in murine dendritic cells, using quercetin as autoinflammatory positive control.

Below, the cell culture scheme is indicated in Table 9.

**Table 9**

| | |
|---|---|
| **Day 0** | Isolation and cultivation of BMDCs |
| **Day 10** | Stimulation with quercetin (25 µg/ml) and samples (100 µg/ml in H₂O) |
| **Day 11** | Stimulation with LPS (1 µg/ml) |
| **Day 12** | Collection of the supernatants for ELISA test 24 hours after LPS) |

Samples at a concentration of 100 µg/ml were used for this test.

In Table 10 the results related to the antioxidant activity determination with ABTS and DPPH assays are indicated. The results of ABTS (2,2'-azino-bis(3-ethylbenzothiazolin-6-sulphonic acid) are expressed as Trolox equivalents (TE) µmol/g of sample.

**Table 10**

| | **ABTS (µmol TE/g)** | **DPPH (µmol TE/g)** | **DPPH activity of radical scavenging (%)** |
|---|---|---|---|
| Red lentil pasta of the invention | 1.1 ± 0.02^{bc} | 1.42 ± 0.03^{bc} | 11.53 ± 0.09^{bc} |
| Prior art corn-rice pasta | 0.37 ± 0.07^{c} | 1.1 ± 0.04^{c} | 8.16 ± 0.03^{c} |

| | | | |
|---|---|---|---|
| * The analyses were carried out in double on each pasta batch, and the results obtained from three analytic replicates were expressed as mean ± standard deviation (SD). The comparisons between the groups were performed by ANOVA followed by Tukey-Kramer post-hoc test. Different letters mean significative differences (p value <0.05), superscript ^{b}, the obtained result lies in the group b of the results; superscript ^{c}, the obtained result lies in the group c of the results. | | | |

From Table 10 it is evident that the lentil based-pasta has a strong antioxidant activity expressed as DPPH activity of radical scavenging (%) compared to rice/corn pasta.

Further, the antioxidant activity of the pasta object of the invention obtained from 100% lentil flour, determined by ABTS was higher than that of prior art, with values equal to 1.1 µmol TE/g of the extract.

For the assessment of the immunostimulant activity, the samples, after preparation, were freeze-dried and, subsequently, resuspended in water and used to stimulate the immune response in murine dendritic cells. For this test, samples at a concentration of 100 µg/ml were used.

In Table 11 the analyzed samples, the related abbreviation, and the used cell culture scheme are present.

**Table 11**

| **Samples** | **Abbreviations** | **ID Samples** |
|---|---|---|
| **Matrix enzymes (control) 3h retentate** | K-3h R | 5 |
| **Lentil pasta of the invention 3h retentate** | #-3h R | 6 |
| **Matrix enzymes (control) 16h retentate** | K-16h R | 7 |
| **Lentil pasta of the invention 16h retentate** | #-16h R | 8 |
| **Matrix enzymes (control) 3h permeate** | K-3h P | 9 |
| **Lentil pasta of the invention 3h permeate** | #-3h P | 10 |
| **Matrix enzymes (control) 16h permeate** | K-16h P | 11 |
| **Lentil pasta of the invention 16h permeate** | #-16h P | 12 |

Quercetin was used as anti-inflammatory positive control.

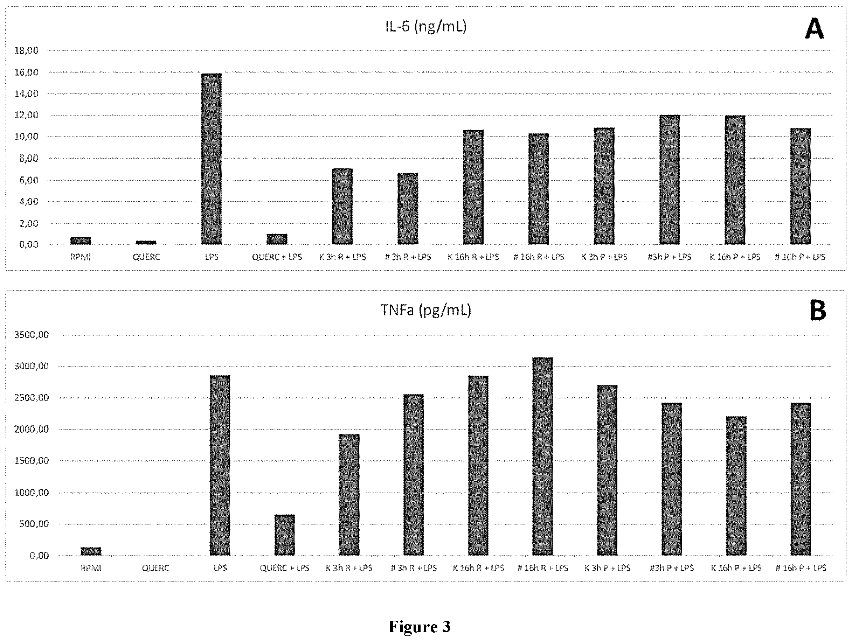

In Figure 3A/B the Elisa results of pasta samples assessed in dendritic cell for the immunostimulant activity (IL-6 and TNFα) are indicated.

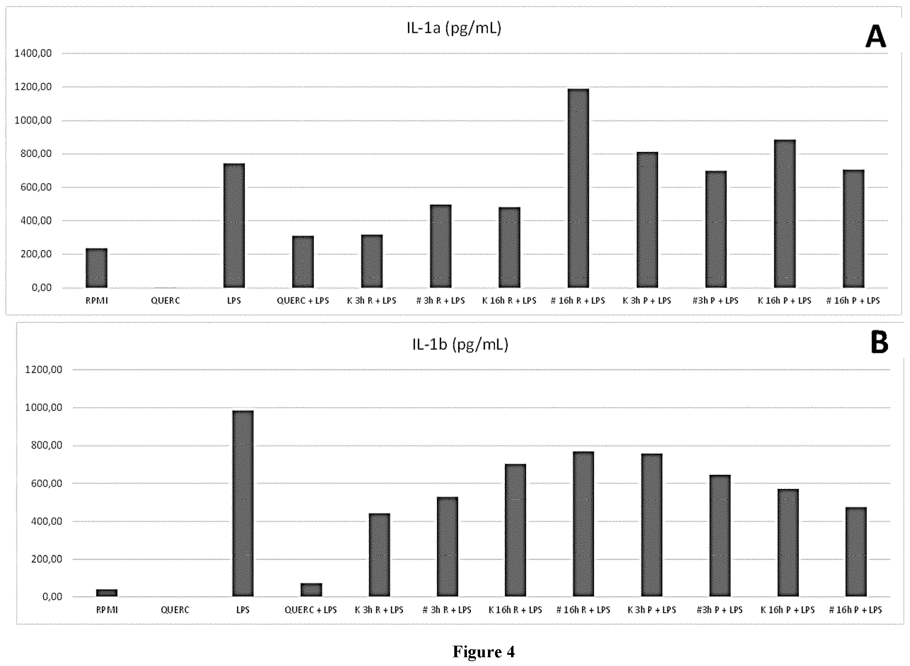

In Figure 4A/B the Elisa results of pasta samples assessed in dendritic cell for the immunostimulant activity (IL-1a and IL-1b) are indicated.

From the results, depicted in Figures 3 and 4, it is evident that all the tested samples modulate the production of cytokines in the cellular supernatant, with few differences between permeates and retentates, and between control and pasta sample.

Based on the results indicated in the Tables above, the lentil pasta shows lower carbohydrate hydrolysis index (%) and estimated glycemic index (pGI) and a higher content of resistant starch compared to the prior art.

### EXAMPLE 5 - In vivo evaluation of the pasta of the invention, according to Example 1, compared to the prior art gluten-free pastas, effect on the glycemic index and protein digestibility

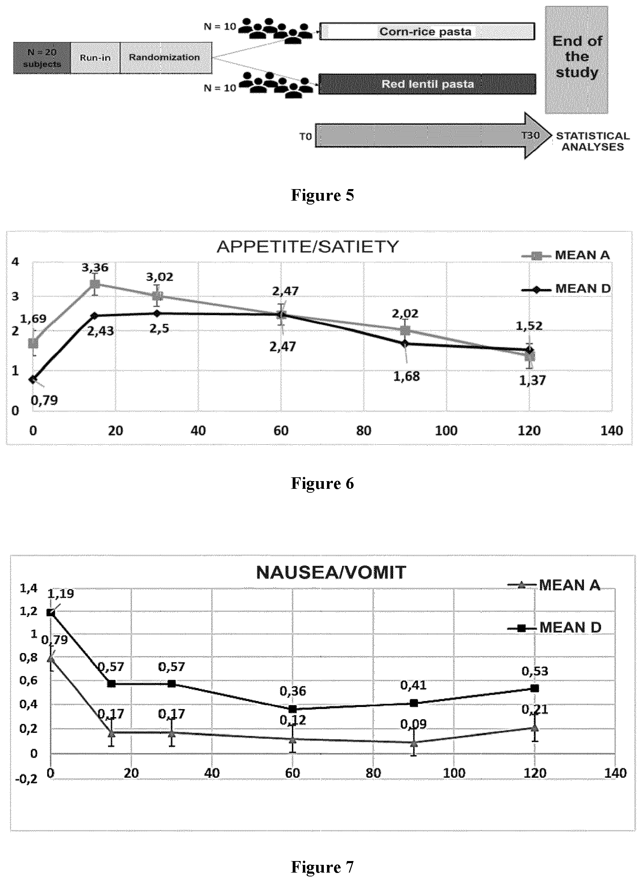

20 Volunteers divided in 2 groups of 10 were administered with two different kinds of pasta for 30 days (Figure 5):
- red lentil pasta of the invention according to Example 1, and
- prior art rice/corn pasta.

The same subjects ate also a prior art pasta (based on corn and/or rice) as a control for the *in vivo* test in order to assess the glycemic index of the subjects after eating the pasta of the invention compared to the prior art rice/corn pasta. In addition to the glycemic index, also the protein digestibility was assessed to confirm what observed *in vitro,* according to Example 3.

At time t₀ the subjects were subjected to an echography study of the gastric and cholecystic motility after the intake of an amount equal to 80 g of pasta assigned to each group.

Further, the subjects were subjected to:
- an analysis of the oro-cecal (small intestine) transit time assessed by lactulose H2-breath test;
- a serial measurement of glycemia;
- hematic exams;
- semi-quantitative complementary and validated questionnaires to assess the severity, frequence, and duration of any gastro-intestinal tract symptom;
- the assessment of the pleasantness and digestibility of the meal in object; and
- the analysis of the fecal microbiota.

At the end of the 30 days (t₃₀), the subjects were subjected again to hematic exams, the questionnaires already administered at time t₀, a second analysis of the fecal microbiota.

A first analysis of the obtained data provided the following results:
- TASTE: the satisfaction rating in a visual analogue scale (VAS) from 0 to 100 mm was: lentils 64.5 ± 4.1 and rice/corn 51 ± 8.

A higher and statistically significative satisfaction rating in the red lentil pasta of the invention compared to the prior art rice/corn based-pasta was observed. This result is confirmed by the fact that the volunteers affirmed that they would like to continue eating the red lentil pasta of the invention.

### 1) At t₀:

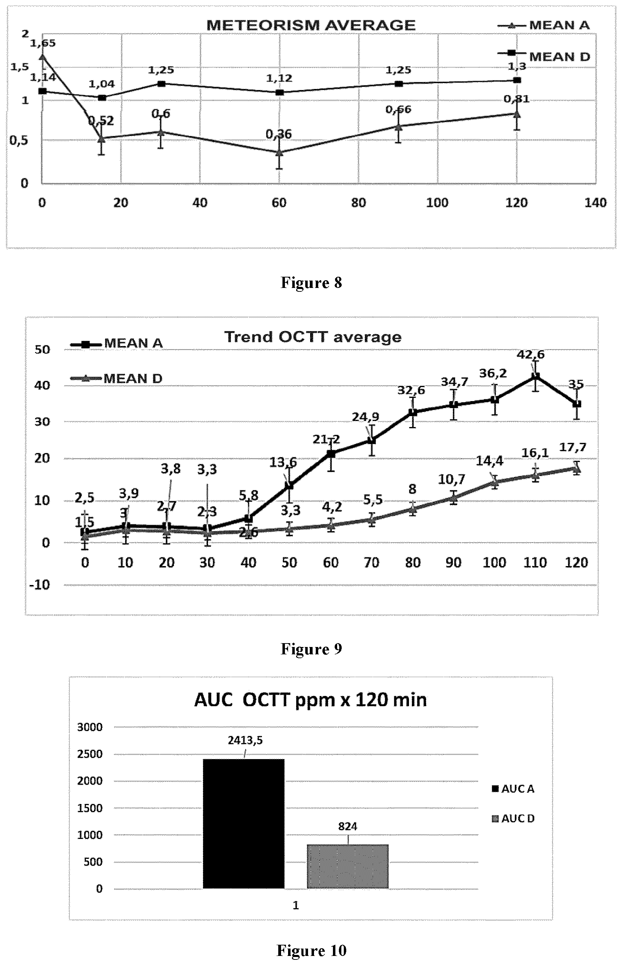

- APPETITE/SATIETY: the appetite and satiety sensations evocated by the intake of the two kinds of pasta are similar;
- FULLNESS: the fullness sensation evocated by the intake of the two kinds of pasta are similar, as evident from the graph in Figure 6;
- NAUSEA/VOMIT: the nausea/vomit sensation evocated by the intake of the two kinds of pasta are different and in particular it is slightly higher in the prior art rice/corn-based pasta base as evident from Figure 7;
- METEORISM: the prior art rice/corn based-pasta seems to cause immediately a sensation of higher abdominal swelling compared to the lentil based-pasta of the invention as evident from Figure 8.

### 2) Difference a t₃₀ compared to t₀:

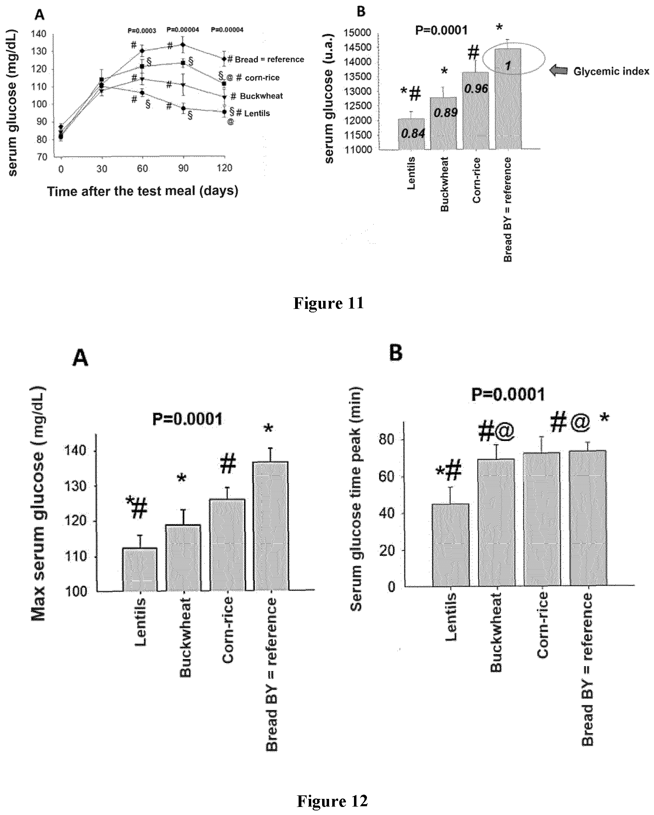

The intake for 30 days (t₃₀) of the two different kinds of pasta led to a change in the symptomatology referred from patients, respectively:
- FULLNESS: a trend of the prior art rice/corn based-pasta to cause a reduction of the fullness sensation compared to the lentil based pasta of the invention was observed;
- KINETICS: the gastric antrum and cholecystic motility observed by echography after 2 hours from the intake of the 2 kinds of pasta were comparable;
- GLYCEMIA: the trend of the glycemic values in the 120 mins after the meal is represented in Figures 9-12A/B. Beside the two pastas in object also other gluten-free pastas (buckwheat based-pasta) were included for comparative purposes. A trend for lower values and precocious times of glycemic peak exists especially for pastas A (red lentil pasta of the invention), compared to B (buckwheat pasta) and C (corn-rice). The lentil based-pasta of the invention is the one showing the lower glycemic index.

### EXAMPLE 6 - In vivo evaluation of the pasta of the invention according to Example 1 compared to the prior art gluten-free pastas on the human lipidic profile

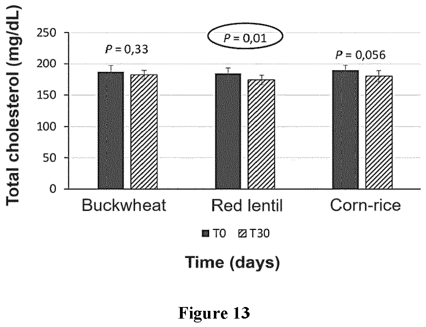

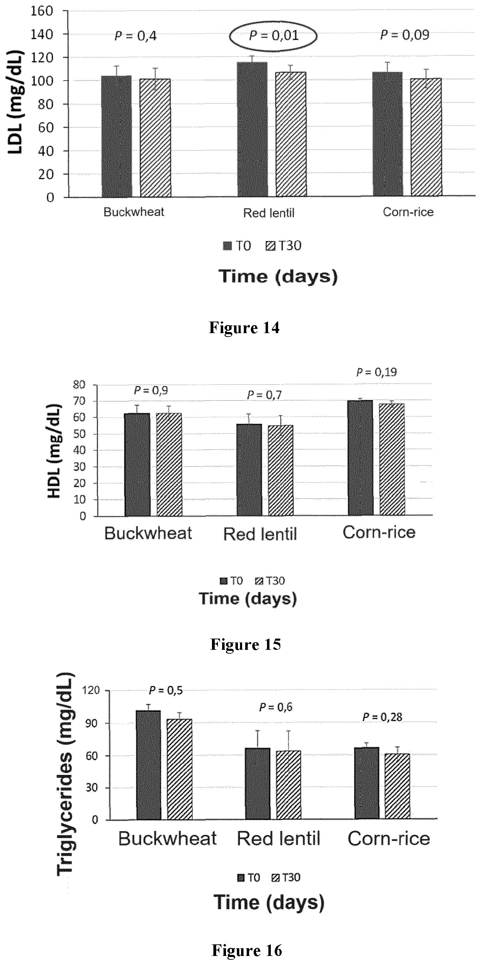

The intake for 30 days of lentil based-pasta brings to a statistically significative reduction (P <0.05) of the total cholesterol (Figure 13) and LDL form (Figure 14). None of the other kinds of gluten-free pasta allows a statistically significative reduction of the total cholesterol (Figure 13) and LDL form (Figure 14). No differences in the HDL cholesterol concentration (Figure 15) and total triglycerides (Figure 16) were found.

### EXAMPLE 7 - In vivo evaluation of the pasta of the invention according to Example 1 on human intestinal microbiota

The corn-rice based-pasta and the lentil based-pasta of the invention were administered to 20 healthy subjects for at least 30 days. At the beginning and at the end of the intake the microbiota and the fecal metabolome were assessed. Further, some clinical parameters such as the lipidic (blood cholesterol content) and protein (digestibility, fecal biogenic amine content; ammonia and other fecal pro-inflammatory substances) metabolism were assessed.

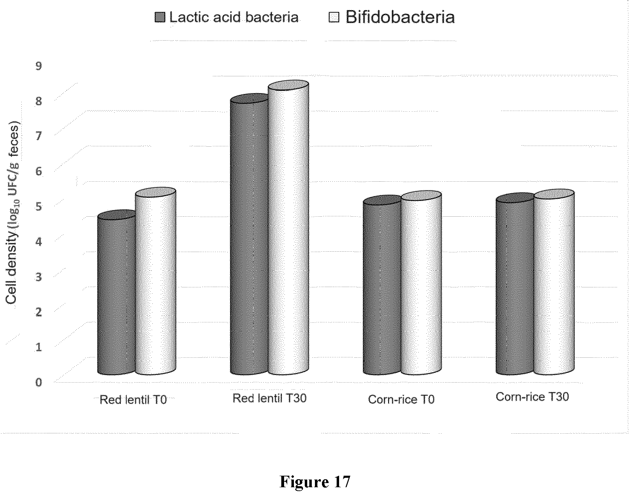

The results shown in Figure 17 demonstrate that the fecal samples of the volunteers administered with the lentil based-pasta of the invention, according to Example 1, show an increment of the lactic acid bacteria and bifidobacteria compared to the prior art corn-rice based-pasta. Further, also the short chain fat acids (acetic acid, butyric acid, and propionic acid) are more present in the fecal samples of volunteers administered with the lentil pasta of the invention, according to Example 1.

### EXAMPLE 8 - Comparative Example of the red lentil pasta of the invention, according to Example 1 obtained by cold extrusion, compared to a lentil pasta obtained by hot extrusion.

The effect of the extrusion process, carried out both without steam aid (cold environment) and with hot steam aid (hot environment), on the sensorial properties of the red lentil pasta was assessed.

The results obtained by panel test showed that the cold obtained pasta showed a good raw and cooked appearance, the taste remembers intensely the starting material, good performance in terms of texture.

### EXAMPLE 9 - Pasta making process for the preparation of a comparative pasta

A red lentil grain (*Lens culinaris M.,* cv. Itaca) was provided with the following characteristics:
- proteins equal to 24.08 ± 0.81 g/100 g,
- fibers equal to 19.26 ± 2.54 g/1 g,
- complex carbohydrates equal to 40.52 g/100 g,
- fats equal to 1.36 ± 0.21 g/100 g,
- phosphorous equal to 376 ± 30.1 mg/100 g,
- calcium equal to 24.8 ± 2.5 mg/100 g,
- iron equal to 6.12 ± 0.92 mg/100 g,
- zinc equal to 3.81 ± 0.76 mg/100 g, and
- manganese equal to 1.53 ± 0.31 mg/100 g.

After a washing, disinfestation, and decortication step, said grain was subjected to grinding by means of a multigrain mill to obtain a 100% red lentil flour with a definite particle size (Tables 13A and 13B) having the qualitative characteristics illustrated in Table 12.

**Table 12**

| | |
|---|---|
| Water (%) | [10-12] |
| Ashes (% dm) | [2.30-2.55] |
| Fat (% dm) | [0.8-0.9] |
| Proteins (%) | [28.5] |
| Protein solubility index (NSI) (%) | [74.5-82.5] |
| Gelatinization grade (%) | [7.3-7.5] |
| Amylose (%) | [26.5-29.5] |
| Damaged starch (%) | [2-2.5] |

The values of Table 12 are herein defined by a range due to the required variability of the above in the agronomic field.

The particle size was measured by means of Buhler MLI330 sieves of different width (with size indicated in Table 13B) and the results for the lentil flour of the invention are indicated in Tables 13A and 13B.

**Table 13A**

| **Particle diameter** | **<355 µm** | **<290 µm** | **<250 µm** | **<200 µm** | **<125 µm** | **<90 µm** |
|---|---|---|---|---|---|---|
| **(%)** | [91-72] | [44-36] | [22-18] | [11-9] | [7-6] | [4-3] |

**Table 13B**

| **Particle diameter** | **<300 µm** | **<250 µm** | **<180 µm** | **<125 µm** | **<100 µm** | **remnant** |
|---|---|---|---|---|---|---|
| **(%)** | 49(± 3) | 19 (± 3) | 7 (± 3) | 7 (± 3) | 5 (± 3) | 3 (± 3) |

The lentil flour having the characteristics illustrated in Tables 12 and 13A-B was inserted in a press, represented in Figure 1, and mixed with water at a concentration of 22-25% by weight with respect to the weight of the dough, according to the parameters shown in Table 14.

**Table 14**

| **Lentil flour** | | |
|---|---|---|
| Dosage (kg/h) | [1250-1350] | 1300 |
| Water (%) | [22-25] | 23 |
| Temperature (°C) | [25-28] | 26,5 |

| **Steam** | | |
|---|---|---|
| Dosage (%) | 0 | 0 |
| Pressure (bar) | 0 | 0 |
| Temperature (°C) | 0 | 0 |

Given the coarser particle size of the comparative flour, the water volume used to obtain the dough compared to the lentil flour of the invention according to Example 1 in the production process was reduced, due to the different ability of the coarser flour to absorb water.

The thus obtained red lentil flour based-mixture of the invention was kneaded by a kneader equipped with a co-rotating twin-screw, represented in Figure 2, for a time of 2.5 mins, according to the parameters shown in Table 15.

**Table 15**

| | | |
|---|---|---|
| Speed (rpm) | [70-80] | 75 |
| Power (KW) | [40-50] | 45 |
| Temperature (°C) | [30-35] | 32.5 |

| **Screw** | | |
|---|---|---|
| Speed (rpm) | [22-24] | 23 |
| Power (KW) | [70-80] | 75 |
| Vacuum (mbar) | [160-195] | 177 |

| **Cylinder** | | |
|---|---|---|
| Temperature (°C) | [28-32] | 30 |

| **Head** | | |
|---|---|---|
| Temperature (°C) | [58-62] | 60 |
| Dough temperature (°C) | [58-62] | 60 |
| Dough pressure (bar) | [45-65] | 55 |

The only variation applied in the production process compared to the flour of Example 1 is related to step c) of dough extrusion.

In fact, at the level of the compression screw, compressing the dough, the pressure is 45-65 bars (compared to the process applied to obtain the product of Example 1 according to the invention wherein the pressure is about 60-70 bars).

This variation depends solely from the different particle size of the comparative flour, compared to the one of the invention according to Example 1.

The thus obtained dough is subsequently extruded by means of a compression screw, compressing the dough applying a pressure comprised between 45 and 60 bars keeping a temperature of the dough comprised between 45 and 50 °C and conveying the dough on an extruder, thus obtaining a moist pasta, which is drawn and finally inserted into a dryer, according to the parameters indicated in Table 16.

**Table 16**

| **Pre-drying** | | |
|---|---|---|
| Temperature (°C) | [78-82] | 80 |
| Relative humidity (%) | [60-65] | 62.5 |

| **Drying** | | |
|---|---|---|
| Temperature (°C) | [78-82] | 80 |
| Relative humidity (%) | [65-70] | 67.5 |

| **Cooling** | | |
|---|---|---|
| Temperature (°C) | [25-28] | 26.5 |
| Relative humidity (%) | [45-55] | 50 |
| Total time (mins) | [240-290] | 265 |

### EXAMPLE 10 - Test of the characteristics of the pasta of the invention obtained according to Example 1 and the comparative pasta obtained according to Example 9

Through panel test it is evident that the pasta obtained with the comparative flour according to Example 9, showed a pejorative result from the structural point of view, specifically with respect to integrity and chewiness. In fact, the flour with a coarser particle size has a lower water absorption ability (*i.e*. hydration) and therefore also its gelatinization in the process of cold pasta making is reduced.

It follows that the resulting pasta has a worse chewiness due to a different formation of the protein aggregates (embedding starch and other components) caused by a lower dough hydration.

In Table 17, final characteristics of the pasta of the invention, obtained by the process according to Example 1, and the comparative pasta, obtained according to Example 9, are reported wherein + means a negative evaluation, while +++ means a very positive evaluation.

**Table 17**

| | **Chewiness** | **Surface integrity** |
|---|---|---|
| **Pasta according to Example 1** | ++ | +++ |
| **Pasta according to Example 9** | + | + |

Therefore, from Table 17 it is evident how the specific particle size profile of the flour influences the characteristics of the resulting pasta, for example in terms of chewiness and surface integrity after cooking, pointing out the excellence of the pasta according to the invention.

## Claims

1. A flour consisting of 100% w/w red lentils having a particle size of less than 355 µm, wherein said particle size is **characterized by** the following particle size distribution, measured by means of a MLI300 model Buhler sieve:
| **Particle diameter** | **<355 µm** | **<290 µm** | **<250 µm** | **<200 µm** | **<125 µm** | **<90 µm** |
|---|---|---|---|---|---|---|
| **(%)** | from 99.9 to 99.5 | from 98.5 to 99.5 | from 79.5 to 83.5 | from 54 to 54.5 | from 29.5 to 30.5 | from 24.5 to 25 |

2. A process for producing a red lentil pasta, comprising the steps of:
a) providing at least one flour according to claim 1;
b) mixing said flour of step a) with water, to obtain a dough;
c) extruding said dough of step b), to obtain a moist pasta;
d) drying said moist pasta of step c), to obtain a dried pasta; and
e) cooling said dried pasta of step d), to obtain a cold dried pasta;
wherein:
in step b) the water amount is comprised between 20 and 30% by weight with respect to the total weight of the dough; and
step c) is carried out by cold extrusion.

3. The process according to claim 2, further comprising a step b1) after step b) and before step c) of thermo-regulating, which brings the dough of step b) at a temperature comprised between 20 and 30 °C.

4. The process according to claim 2 or 3, wherein step c) is carried out by means of a compression screw compressing the dough applying a pressure comprised between 60 and 70 bars.

5. The process according to any one of claims 2-4, wherein step c) is carried out keeping a temperature of the dough comprised between 43 and 55 °C, preferably a temperature between 45 and 50 °C.

6. The process according to any one of claims 2-5, further comprising a step c1), after step c) and before step d), of pre-drying, wherein the moist pasta of step c) is conveyed inside a shaker predryer and subjected to an air-jet at a temperature comprised between 58 °C and 68 °C and at a relative humidity comprised between 18% and 24%.

7. The process according to any one of claims 2-6, wherein step d) is carried out in a dryer, preferably for a time comprised between 3 hours and 6 hours, more preferably between 3 hours and 20 mins up to 5 hours and 30 mins.

8. A pasta obtainable by a process according to any one of claims 2-7.

9. A food composition comprising a flour according to claim 1.

10. Use of pasta according to claim 8 or the food composition according to claim 9 as a food product, preferably as gluten-free food product.
